# EUROPEAN PATENT SPECIFICATION

(11) **EP 2 317 346 B1**
(45) Date of publication and mention of the grant of the patent: **31.07.2019**
(21) Application number: 10251857.8
(22) Date of filing: 27.10.2010
(51) Int. Cl.: G01V 8/10, F16P 3/14

(54) **Safety edge and associated method**
Sicherheitsleiste und zugehöriges Verfahren
Bordure de sécurité et procédé associé

(30) Priority: 29.10.2009 GB 0918994
(43) Date of publication of application: 04.05.2011
(73) Proprietor: Dalmatic Lystrup A/S, 8520 Lystrup (DK)
(72) Inventor: Gronlund, Ole, 4700 Naestved (DK)
(74) Representative: Prock, Thomas

(56) References cited:
- US-A- 4 486 656
- US-B1- 6 359 392
- US-B1- 7 468 723

## Description

### FIELD OF THE INVENTION

The present invention relates a safety barrier employing a transmitter and a receiver arranged to cooperate with the transmitter. It also relates to a method of operating such a safety barrier. The present invention is more particularly concerned with the adjustment of the level of electromagnetic radiation emitted by the transmitter.

### BACKGROUND

Safety edges or safety barriers find widespread use in industrial and domestic applications. Safety edges may, for example, comprise a transmitter that transmits electromagnetic radiation onto a light path towards a receiver. The receiver is arranged to create a signal that is indicative of whether or not the electromagnetic radiation transmitted by the transmitter is being received. This signal may serve as an indicator of an interruption of the light path between the transmitter and the receiver. Arrangements of this type may serve various purposes and find various uses, for example in controlling the movement of large doors or gates and in particular in stopping such movement if an obstruction is being encountered. Some such doors or gates comprise an elastically deformable hollow profile at their leading edge, that is at the edge that would, in a particular arrangement, contact an obstruction first. Transmitters and receivers of the above mentioned type are arranged at the respective ends of the hollow profile such that the light path extends through the hollow part of the profile. The elastic profile is arranged so that a deformation of the elastic profile due to contact of the leading edge of the door or gate with an obstruction causes an interruption of the signal path so that the receiver no longer receive electromagnetic energy transmitted by the transmitter and consequently provides an output signal indicative of the interruption of the signal path. Movement of the door or gate can then be interrupted based on this output signal to prevent further damage being caused by the movement of the door or gate.

US 4,486,656 discloses a pulsed light barrier according to the precharacterising portion of Claim 1.

US 6,359,392 discloses an LED driving circuit including a first LED coupled in a forward current path between first and second nodes and a second LED coupled in a reverse current path between the second and first nodes. A power supply drives the first node with a voltage pulse. A capacitor is coupled to the second node and stores charge while the power supply is driving the first LED in the forward current path during voltage pulses. A discharge circuit drains the charge from the capacitor to drive the second LED in the reverse current path between voltage pulses.

US 7,468,723 discloses a driver for a series-coupled white LED string. The driver includes a boost converter that is arranged to provide an output voltage from a source voltage. The driver also includes one switch that is coupled across half of the series-coupled LEDs and another switch that is coupled across the other half of the series-coupled LEDs. A 50% duty cycle signal is employed to control the switches. While the boost converter is enabled, one of the switches is on and the other is off.

### SUMMARY OF THE INVENTION

According to an aspect of the present invention there is provided a safety barrier comprising a transmitter and a receiver connected to the transmitter via a feedback path. The transmitter comprises a source of electromagnetic radiation, a charge storage means, actuation means arranged to cause the source to intermittently emit electromagnetic radiation, wherein the intensity of emission of electromagnetic radiation is determined by the amount of charge stored in the charge storage means, and setting means arranged to set the intensity of the electromagnetic radiation by storing a predetermined charge in the charge storage means in a period of time when the actuation means does not cause the source to emit electromagnetic radiation. The receiver is arranged to provide an indication, via the feedback path, whether electromagnetic radiation consistent with electromagnetic radiation emitted by the transmitter is received at the receiver. The transmitter is arranged to monitor the feedback line and to cause the setting means to increase the predetermined intensity if, after a preceding decrease in the predetermined intensity, the indication on the feedback line has changed to no longer indicate that electromagnetic radiation consistent with electromagnetic radiation emitted by the transmitter is being received at the receiver.

It was realised that it is desirable for the output power of a transmitter of a safety barrier to be controllable. It was further realised as being advantageous for the transmitter to operate with a transmit power that is only a small amount larger than a minimum transmit power required for the receiver to receive a reliably identifiable signal under normal operating conditions. This is based on the realisation that stray electromagnetic radiation from the transmitter may be reflected on surfaces surrounding the light path, such as the interior surfaces of the above mentioned hollow elastic profiles that may surround the light path, and may thus arrive at the receiver via a path that does not correspond to an intended light path. In this case an interruption of the intended light path (via which the majority of the energy emitted by the transmitter will still be transmitted to the receiver) may not lead to a complete interruption of light transmission between the transmitter and the receiver. Stray light reflected in this manner may thus still be transmitted to the receiver past an obstruction and may cause the receiver to generate an output signal that incorrectly indicates that the light path that is to be monitored has not been interrupted. By regulating the transmit power such that the transmit power is only a small amount larger than a minimum transmit power that is required for the receiver to receive a reliably identifiable signal under normal operating conditions ensures that the amount of reflected stray electromagnetic energy received at the receiver is also limited, ideally to a level that does not cause the receiver to interpret any received reflected stray electromagnetic energy as valid signal from the transmitter.

The minimum amount of transmit power required to be used in a safety edge depends on the individual operating conditions of each safety edge, say for example on the length of the signal path, on the amount of particulates and/or contaminants within a hollow elastic profile surrounding the light path, in particular on the transmitter and the receiver, as well as on other factors. The level of transmit power optimally used thus differs from safety edge to safety edge and even for a particular safety edge over time. It is thus desirable for a transmitter to be capable of adjusting transmit power to a level that is perceived optimal for the operating conditions experienced by the safety edge at the time of the adjustment. Providing a transmitter with the ability to perform such adjustment can require the use of costly processors capable of making desired adjustments in a short time period that may be available for making such adjustments.

The transmitter of the safety barrier of the present invention provides for transmit power adjustment in an inexpensive manner by operating the transmitter to emit electromagnetic radiation intermittently. This allows the level of transmit power used in the periods of time during which the transmitter transmits electromagnetic radiation to be adjusted to a desired level during periods of time during which the transmitter does not transmit electromagnetic radiation. This manner of transmitting electromagnetic radiation thus allows for the use of setting means that may operate at a lower operating frequency than setting means that would otherwise be required. The source of electromagnetic energy is preferably a light emitting diode, be that a LED emitting visible light or a LED emitting light in the infrared or ultraviolet wavebands.

The actuation means of the transmitter may be arranged to cause the source to emit bursts of pulses of electromagnetic radiation. In this case the setting means may be arranged to set the predetermined intensity between bursts, rather than between individual pulses of the bursts. The use of burst of pulses is particularly advantageous when compared to the intermittent transmission of continuous pulses, as the plurality of pulses constituting a burst of pulses may be less likely to be generated by equipment surrounding the safety edge. It is thus less likely for extraneous electromagnetic radiation that could be interpreted incorrectly by the receiver as originating from the transmitter to arrive at the transmitter. Pauses between the burst of pulses may be used for setting the intensity of the pulses that are to be transmitted. Thus, even if the use of a high pulse frequency within the bursts of pulses is desired, it is possible for the transmitter to set the intensity of the pulses to be used in the burst in a fashion that does not require setting means that operate at a high clock speed. It will be appreciated that in this case all of the pulses in one burst will have substantially the same intensity. This is, however, not disadvantageous as the changes in the operating conditions of the safety edge are slow when compared to the period of a burst of pulses. The operating conditions over a burst period may thus be considered as being constant and alterations in the operating conditions can adequately be accounted for by changing the transmit intensity between burst of pulses.

The charge storage means may be a capacitor that is being charged while the source does not transmit electromagnetic energy. The capacitor may be charged by a microprocessor provided for controlling the transmitter. The actuation means may comprise a transistor connected to the source of the electromagnetic radiation so that the switching state/conductance of the transistor controls the flow of an electric current through the source of the electromagnetic radiation such that the transistor directly controls the intensity of electromagnetic radiation emitted by the source of the electromagnetic radiation. The charge storage means may be connected to the gate of such a transistor, such that a potential associated with or created by charges stored in the charge storage means determines the potential at the transistor's gate and consequently also the amount of current permitted to flow through the transistor. To limit the draining of charges from the charge storage means or the capacitor the transistor used may be a field effect transistor.

The setting means may comprise the microprocessor connected to the charge storage means and may store charges in the charge storage means by applying voltage pulses to the charge storage means. A pulse width modulation scheme may be used to charge or discharge the charge storage means to store a desired level of charges. The processor may thus adjust the amount of
charges charged to or discharged from the charge storage means by adjusting the width of the pulses applied to the charge storage means while maintaining the pulse amplitude at a constant level. The charging of the charge storage mean in this case may thus only require a change in the timing of the pulses output by the processor, thereby avoiding a need for the microprocessor to create different pulse power levels for charging/discharging the charge storage means. The use of a pulse width modulation scheme for charging the charge storage means is therefore considered particularly advantageous.

One of the terminals of a capacitor that may be used as the charge storage means may be connected to the microprocessor. The other terminal of the capacitor may be connected to a predetermined biasing potential, such as ground potential, during charging. Such biasing causes the charging operation to establish a potential across the terminals of the capacitor. This potential will remain in the capacitor after the end of the charging operation and when the predetermined biasing potential has been removed from the other terminal of the capacitor. A boosting voltage may then be applied to the terminal of the capacitor that is connected to the microprocessor, so that the potential at the other terminal of the capacitor changes to a potential that correspond to the sum of the boosting voltage and the voltage that has been established between the terminals of the capacitor. This sum voltage may then be used as the potential that determines the amount of electromagnetic radiation emitted from the source, for example by applying this sum voltage to the gate of a transistor connected in series with a light emitting diode.

A coarse adjustment of the voltage used to drive the source of electromagnetic radiation through an appropriate choice of boosting voltage in the periods of time in which the source of electromagnetic radiation emits electromagnetic radiation, while a finer adjustment can be achieved by an appropriate choice of charging pulses in the periods of time in which the source of the electromagnetic radiation does not emit electromagnetic radiation. The boosting voltage may, however, instead by constant for all pulses and in a particularly advantageous arrangement may correspond to the voltage provided for charging of the charge storage means, so that the adjustment of the intensity
of the electromagnetic radiation emitted by the source and the activation of the source can be based on a single supply voltage.

Further disclosed is a safety barrier comprising a transmitter, the transmitter comprising a source of electromagnetic radiation and a driving means for the source, the driving means arranged to charge a charge storage means, wherein said charging is such that the charges stored in the charge storage means are insufficient for causing the source to emit light, the driving means further arrange to, following the charging, boost a potential created by the charges in the charge storage means so that the source emits electromagnetic radiation at a predetermined intensity that is in accordance with the stored charges. A voltage used for storing the charges may be the same as a voltage used for boosting. Charging may be accomplished through a pulse width modulated waveform.

A switchable current limiter may be provided in series with the source. This current limiter may be arranged to provide only a weak current limiting function during normal operation of the transmitter. The current limiter may, however, be switched to provide a stronger current limiting function during a test mode, so that the amount of electromagnetic radiation emitted by the source can be reduced by the current limiter. The current limiter may thus provide a means of quickly testing if an operation of the transmitter based on a drastically reduced output power still allows reliable detection of the transmitted signal by a receiver.

The setting means increases the predetermined intensity if the feedback signal from the receiver indicates that electromagnetic radiation is not/no longer being received at the receiver. Doing so is particularly advantageous in scenarios where the intensity of the transmitted electromagnetic radiation had been reduced in a preceding attempt to down-regulate the transmitter power. The transmit power to which the transmitter had newly been adjusted may in this situation and based on the receiver's feedback that no electromagnetic radiation is being received at the receiver be assumed to be insufficient for the receiver to reliably recognise the transmitted signal. A conclusion that an increase of the transmitter power is required for the reliable operation of the safety edge may then be drawn. The transmitter may in this case be arranged to increase the transmitter power to the level previously used in a reliable fashion. Alternatively the transmitter may be arranged to use a transmitter power that is higher than the previously used transmitter power. Even the maximum possible transmitter power may be used for a pre-determined period of time to prevent the receiver from creating an output signal that would indicated that the light path has been interrupted. The receiver may be arranged so delay the creating of an output signal indicating the interruption of the light path for a period of time corresponding to the period of time the transmitter would require for transmitting a predetermined number, such as one, two, three or five, pulses or burst of pulses if the transmitter transmits the pulses in bursts. If the receiver fails to recognise a transmitted pulse or burst of pulses that may have been too low in intensity, for example as a result of the transmitter's attempt to down regulate the amount of transmitter power used in an attempt to identify a minimum necessary transmitter power, and if the transmitter as a reaction to a corresponding indication from the receiver increases the intensity of the transmitted electromagnetic energy, the receiver's failure to recognise a transmitted pulse will not lead to the outputting of a signal indicating that the light path has been interrupted in this case. Once the receiver has fed back a signal to the transmitter to indicate that the receiver again receives the transmitted signal, the transmitter may down-regulate the intensity of the transmitted electromagnetic energy to the previously used safe level, if the intensity of the pulse transmitted immediately after the unsuccessful attempt to down-regulate was chosen to have an intensity above the previously used safe level.

According to an embodiment another aspect of the present invention there is provided a method of operating a safety barrier comprising a transmitter and a receiver. The method comprises causing a source of electromagnetic radiation in the transmitter to intermittently emit electromagnetic radiation with a predetermined intensity by setting the predetermined intensity using a setting means to store a predetermined charge in a charge storage means of the transmitter. The amount of charge stored in the charge storage means determines the intensity of emission of the electromagnetic radiation. The receiver provides, via a feedback path connecting the receiver to the transmitter, an indication whether electromagnetic radiation consistent with the electromagnetic radiation emitted by the transmitter is received at the receiver. The transmitter monitors the feedback line and causes the setting means of the transmitter to increase the predetermined intensity if, after a decrease in the predetermined intensity, the indication on the feedback line has changed to no longer indicate that electromagnetic radiation consistent with electromagnetic radiation emitted by the transmitter is received at the receiver. The predetermined intensity is set in an interval in which the source of electromagnetic radiation has not emitted electromagnetic radiation by said storing in the charge storage means of the predermined charge.

A potential created by the charges stored in the charge storage may be applied to the gate of a drive transistor arranged for driving the source of electromagnetic radiation. The charges stored in the charge storage means may further be boosted during times at which the source of electromagnetic radiation emits electromagnetic radiation by applying a constant voltage to the charge storage means.

Further disclosed is a method of operating a transmitter for a safety barrier or safety edge comprising providing a source of electromagnetic radiation and a driving means for the source. The method further comprises storing charges in a charge storage means so that the amount of charge stored in the charge storage means creates a potential that does not exceed a threshold potential required for causing the source to emit electromagnetic radiation and, thereafter, causing the source to emit electromagnetic radiation in accordance with the stored charges by boosting the potential created by the stored charges with a boosting voltage to create a potential that is higher than the threshold potential.

In the following a preferred embodiment of the present invention will be described by way of example only and with reference to the accompanying drawings.

### BRIEF DESCRIPTION OF THE DRAWINGS

Figure 1 shows a transmitter of the safety barrier in accordance with a preferred embodiment;
Figure 2 A shows details of the timing of the processor shown in Figure 1; and
Figure 2 B shows finer detail of the timing diagram shown in Figure 2A.

### DETAILED DESCRIPTION OF A PREFERRED EMBODIMENT

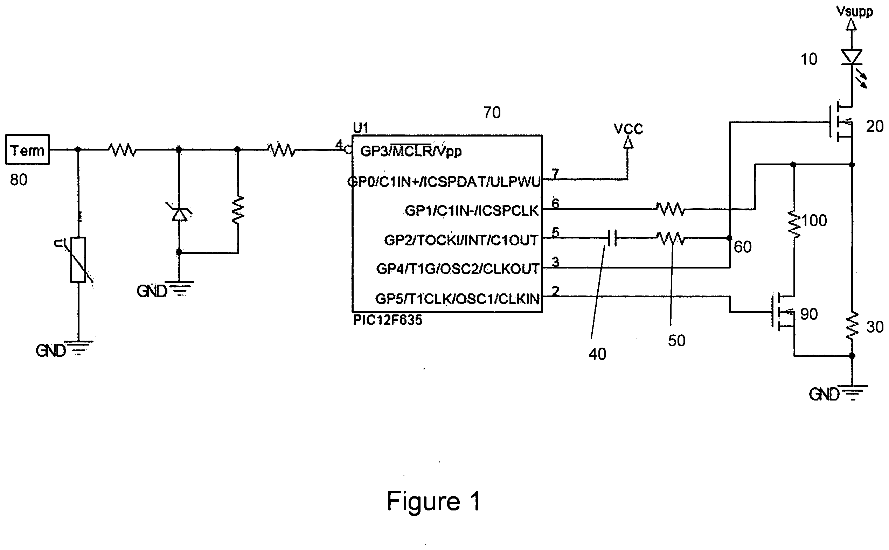

Figure 1 shows a transmitter of the safety barrier according to a preferred embodiment. The transmitter comprises a light emitting diode 10 connected between a stabilised voltage supply Vₛᵤₚₚ and a field effect transistor 20. A resistor 30 is further provided between the source of the field effect transistor 20 and a ground potential. It will be appreciated that the amount of electric current that can flow through the LED 10 is limited by the resistance that is provided in series with the FET 20, that is by resistor 30 if the FET 90, the function of which will be described in more detail later, is nonconductive, and also by the conductivity of the FET 20. The conductivity of the FET 20 can be altered through the application of an appropriate voltage at the gate of the FET 20, so that the current flowing through the FET 20 and the LED 10 can be adjusted. The gate of the FET 20 is connected to series network comprising a capacitor 40 and a resistor 50. The purpose of resistor 50 will be described in more detail below. The potential provided on the terminal of the capacitor 40 that is connected to the resistor 50 is the potential that is applied to the gate of the FET 20, if no other potential is provided at node 60, as there will be substantially no current flowing into the gate of the FET 20 and consequently, there will not be any voltage drop across resistor 50. The other terminal of the capacitor 40 is connected to an output pin, pin 5/port GP2, of a microprocessor 70. The processor used in the preferred embodiment is a PIC12F635 available from "Microchip Technology Inc." at "Microchip Technology Nordic, Literbuen 9, DK-2740 Skovlunde, Denmark, the operation of which will be described in more detail in the following. Pin 7/port GP0 of the processor 70 is connected to a supply voltage V_{CC}. Pin 4/port GP3 of the processor 70 is connected to feedback terminal 80 of the transmitter. Pin 3/port GP4 of the processor 70 is connected to node 60 while pin 2/port GP5 is connected to the gate of a further field effect transistor 90. The drain of FET 90 is connected to a further resistor 100. The series combination of FET 90 and resistor 100 is provided in parallel
to resistor 30. The transmitter is connected to the receiver via feedback terminal 80 and a feedback line. As will be readily appreciated by the person skilled in the art, the components provided between the terminal 80 and pin 4 of the processor 70 are for protection of the processor 70 from the application of excessive voltages and currents. The function of these components will be readily apparent to the person skilled in the art and it will thus not be necessary to discuss the function of these components in more detail herein.

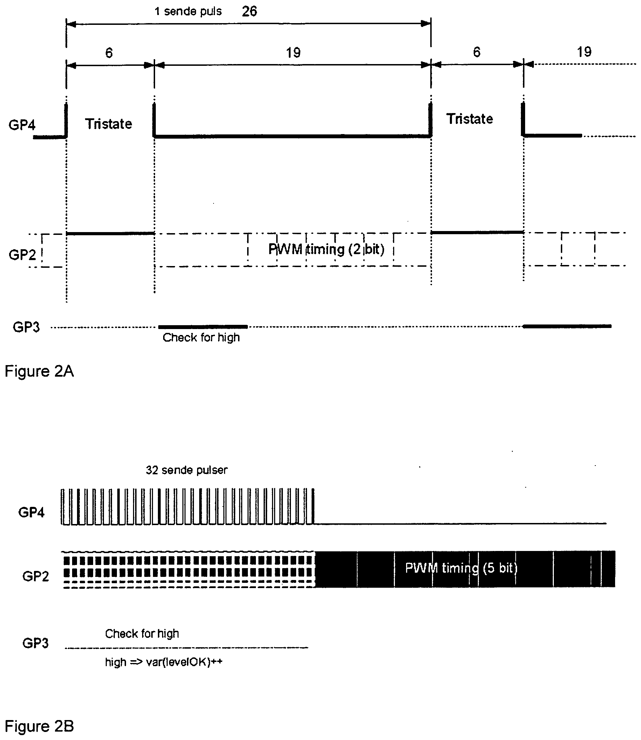

Turning now to Figures 2A and 2B, the operation of the transmitter will be described in more detail. The transmitter of the safety barrier emits bursts of 32 light pulses over a period of 6 micro seconds, indicated in Figure 2A, after a rest period of 19 micro seconds, , to provide a pulse period of 26 micro seconds. No light is emitted from the LED 10 in the rest period, while light is emitted from the LED 10 during period of 6 micro seconds.

In a first part of the rest period the processor 70 checks port GP3 for feedback received from the receiver connected via the feedback line to terminal 80. If such feedback is received in the form of a 'HIGH' signal at port GP3, then the processor is arranged to interpret this as an indication that the receiver detects electromagnetic radiation that is consistent with electromagnetic radiation emitted by the transmitter, that is that the current transmission intensity is sufficient. The intensity of the electromagnetic radiation emitted by the LED 10 is dependent upon the amount of charge stored in capacitor 40. The amount of charge stored in the capacitor 40 is thus considered appropriate if a 'HIGH' signal is detected at port GP3 of the microprocessor 70 and the amount of charge stored in capacitor 40 does in this case not need to be altered for future transmissions of bursts of pulses (although some charge may be supplied to the capacitor 40 by the processor 70 to compensate for some inadvertent discharge of the capacitor 40).

The manner in which charges are added or removed from the capacitor 40 will now be described. If the amount of charge stored in the charge storage capacitor 40 is to be altered, then a pulse width modulated waveform is applied to the output GP2 of the microprocessor 70. The amplitude of the applied pulses is thereby kept constant while the width of the pulses is altered such that
the duty cycle of the pulse width modulated waveform is at a level that allows an increase of the amount of charge stored in the capacitor 40 or a draining of charges from the capacitor 40, as appropriate. During this charging processor port GP4 of the microprocessor 70 is maintained at a predetermined potential, ground potential in this embodiment, to allow the establishing of a charging potential across the capacitor.

If no charge is to be added to or drained from the capacitor 40 then a second part of the rest period may simply be used as waiting period during which no action is necessary. It will be appreciated that in the rest period a charge may already be stored in the capacitor 40 and be retained there without change. The potential at the port GP2 may be tri-stated during this waiting period, so that the charges stored in the capacitor remain unaltered. Alternatively a pulse width modulated waveform may be output at port GP2 by the microprocessor 70 with a duty cycle arranged to maintain the amount of charge in the capacitor 40. The latter alternative may be of particular use in cases where a parasitic discharging of the capacitor 40 needs to be compensated for.

As can be seen from Figure 2A, throughout the entire rest period the port GP4 of the processor 70 is at a low potential, thereby providing a low potential at node 60 and consequently also at the gate of the FET 20. This low potential is insufficient for rendering the FET 20 conductive. Consequently current flow through the FET 20 is prevented throughout the rest period.

If the amount of charge stored in the capacitor 40 is to be changed, for example if the check for a high signal at port GP3 in a period has revealed that there is no 'HIGH' signal at port GP3 of the microprocessor 70 and it has therefore been concluded that the receiver is not transmitting a feedback signal indicating that the OLED emitted by the light emitting diode 10 is being received, then the amount of charge stored in the capacitor 40 can be decreased in the above described manner by applying a pulse width modulated waveform at port GP2 of the microprocessor 70 having a duty cycle that is sufficiently low to cause a discharging or partial discharging of the capacitor 40. It will be appreciated that the time required for decreasing the amount of charge in the capacitor (or in fact for increasing the charge in the capacitor, if
desired/appropriate) is also dependent on the duty cycle of the pulse width modulated waveform output to port GP2 of the microprocessor. In particular, charging/discharging of the capacitor can be accomplished in a more rapid fashion by increasing a difference between a duty cycle used for the charging/discharging and a duty cycle that would be required for maintaining the amount of charge in the capacitor 40 at a current level to decrease/increase the sum potential provided at node 60 during pulse times in the period of 6 micro seconds.

In the period of 6 micro seconds the port GP4 of the processor is tristated, that is switched to a floating state, while a high potential is output at port GP2 of microprocessor 70. The application of this high potential or boosting voltage causes the potential at node 60 to increase to the sum of the potential provided at port GP2 of the processor 70 and of the voltage stored within the capacitor 40. It is this sum potential that is applied to the gate of the FET 20. The boosting voltage is chosen to be such that the sum potential is large enough to render the FET 20 conductive when it is taken into account that the potential at node 60 is lower than the boosting potential, as the summing of the boosting potential with the potential stored in the capacitor 40 reduces the boosting potential. It will be appreciated that, although the boosting potential applied at port GP2 of the microprocessor 70 is required in the preferred embodiment for rendering the FET 20 conductive the amount of current permitted to flow through the FET 20 is nevertheless governed by the amount of charge stored in capacitor 40, in particular if the boosting potential output to port GP2 of the microprocessor 70 is constant for all of the pulses that are to be emitted by the LED 10, as is the case in the preferred embodiment.

As can be seen in more detail from Figure 2B, port GP4 of the processor 70 is only in a floating state while port GP2 outputs a high potential to the capacitor 40. If port GP2 does not provide the higher potential port GP4 is switched to provide a low potential. The sum potential at node 60 is therefore only created during short and well defined times/intervals 32 times during the period of 6 micro seconds, thereby creating the burst of light pulses discussed above.

As discussed above, the processor is also arranged to regulate the intensity of the light emitted by the LED 10 such that the receiver is capable of receiving the transmitted signal but also such that the intensity of the light
transmitted from the LED 10 is not excessive. The processor 70 is therefore arranged to attempt at regular intervals to reduce the amount of charge stored in the capacitor 40 so as to reduce the voltage at node 60 and therefore the intensity of the transmitted light. The processor may, for example, be arranged to reduce the amount of charge stored in the capacitor 40 every pulse bursts/periods of 26 micro seconds. The manner in which the amount of charge stored in the capacitor 40 is reduced in the same manner as described above, namely by the application of a pulse width modulated signal waveform at the port GP2 of the microprocessor 70, wherein the bit of the pulses within the waveform are such that the duty cycle of the pulse bits modulated waveform causes a controlled increase of the charges from the capacitor to a desired level.

Turning to the role of the field effect transistor 90 and the resistor 100, it will be appreciated that, if the FET 90 is activated the resistor 100 will be in a parallel network with the resistor 30. This parallel network has a resistance that is lower than the resistance of resistor 30 taken on its own and the above discussed current limiting function of the resistance provided in series with the FET 20 is thus reduced when the FET 90 is activated by an appropriate signal output by the microprocessor 70 to port GP5. During normal operation of the transmitter shown in Figure 1, the signal output at port GP5 is 'High', so that the FET 90 is active and the resistance provided in series with the FET 20 is that provided by the parallel network of the resistors 30 and 100. The microprocessor 70 is, however, also arranged to de-activate the FET 90 by providing a 'Low' signal at port GP5, so that the resistance provided in series with the FET 20 increases in a step function to the resistance provided by resistor 30. The amount of current that can flow through the LED 10 can thus be decreased considerably by the simple deactivating of the FET 90. If, in reaction to such switching the feedback signal received from the receiver at terminal 80 changes to indicate that the receiver no longer receives a sufficient amount of electromagnetic radiation from the LED 10, then this change in the feedback signal will be taken by the microprocessor 70 to mean that a drastic reduction of the amount of electromagnetic radiation emitted by the LED 10 does not allow for satisfactory operation of the light barrier/safety edge under the particular operating conditions encountered. The microprocessor 70 is arranged to, in this
case, choose a stepwise approach to adjusting the transmitter power by increasing the amount of electromagnetic radiation emitted by the LED 10 in the manner discussed above, namely by gradually lowering the amount of charge stored in the capacitor 40 and by awaiting the receiver's feedback signal after each lowering step.

If the receivers feedback does not change following the deactivation of the output GP5 of the microprocessor, then this is taken by the microprocessor 70 to indicate that a considerable reduction in the intensity of the electromagnetic radiation emitted by the LED 10 is possible without jeopardising the reliable operation of the light barrier/safety edge. The microprocessor 70 may in this case change the amount of charge stored in the capacitor 40 in a more rapid manner, so that, after one or more step of increasing the amount of charge stored in the capacitor 40, the boosted potential at node 60 is such that the intensity of the electromagnetic radiation emitted by the LED 10 when the FET 90 is activated again (that is when the resistance provided in series with the FET 20 is that provided by the parallel network of resistors 30 and 100) is substantially the same as the intensity of the electromagnetic radiation emitted by the LED 10 when the FET 90 was deactivated (that is when the resistance provided in series with the FET 20 was that provided by resistors 30 alone). Further lowering of the transmitter power may then be achieved by a stepwise increase of the amount of charge stored in the capacitor 40 in the manner discussed above and/or by a further deactivation/further deactivations of the FET 90 in attempts to establish if further large reductions in the transmitter power lead to reliable operation of the transmitter.

Port GP6 of the microprocessor 70 is a port that comprises an analogue to digital converter and is used as a sensing port for detecting the amount of current flowing through the FET 20 and therefore also through the LED 10 by monitoring the voltage drop across resistor 30/the parallel network of resistors 30 and 100.

The person skilled in the art will appreciate that the provision of FET 90 and resistor 100 thus allows for a more rapid testing of the feasibility of larger reductions in transmit power. This provides for increased setup speeds, where
large reductions in transmit power from a current level are most likely to be useful/encountered.

Turning now to the receiver of a safety edge that may cooperate with the transmitter shown in Figure 1, receivers that can readily cooperate with the receiver shown in Figure 1 and more specifically that can provide an appropriate feedback signal via a feedback line to terminal 80 of the transmitter shown in Figure 1 are commercially available. A suitable example is the RSS10 receiver commercially available from Dalmatic Lystrup AS of Lægårdsvej 9, Lystrup 8520, Denmark.

It will be appreciated that the above description has been provided by way of example only and that this description is not intended to limit the scope of protection for the invention. It can, for example be envisaged that the pulse sequence used for storing charges in the charge storage means is not a pulse width modulated sequence and that other or additional modulation techniques, such as amplitude modulation, are used to alter the duty cycle of the pulse sequence to allow charging or discharging of the charge storage means. It is moreover envisaged that the charge storage means can be charged or discharged using an appropriate analogue signal instead of a sequence of pulses.

## Claims

1. A safety barrier comprising a transmitter and a receiver connected to the transmitter via a feedback path, the transmitter comprising:
a source (10) of electromagnetic radiation;
a charge storage means (40);
actuation means (20) arranged to cause the source (10) to intermittently emit electromagnetic radiation, wherein the intensity of emission of electromagnetic radiation is determined by the amount of charge stored in the charge storage means (40); and
setting means (70) arranged to set the intensity of the electromagnetic radiation by storing a predetermined charge in the charge storage means (40) in a period of time when the actuation means (20) does not cause the source (10) to emit electromagnetic radiation; **Characterised In That**:
the receiver is arranged to provide an indication via the feedback path whether electromagnetic radiation consistent with electromagnetic radiation emitted by the transmitter is received at the receiver, the transmitter arranged to monitor the feedback path and to cause the setting means (70) to increase the predetermined intensity if, after a preceding decrease in the predetermined intensity, the indication on the feedback path has changed to no longer indicate that electromagnetic radiation consistent with electromagnetic radiation emitted by the transmitter is being received at the receiver.

2. A safety barrier according to Claim 1, wherein said actuation means (20) is arranged to cause the source (10) to emit bursts of pulses of electromagnetic radiation and wherein said setting means (70) is arranged to set the predetermined intensity between bursts.

3. A safety barrier according to any preceding claim, further comprising a switchable current limiter (30, 90, 100) in series with the source (10).

4. A method of operating a safety barrier comprising a transmitter and a receiver, the method comprising causing a source (10) of electromagnetic radiation in the transmitter to intermittently emit electromagnetic radiation with a predetermined intensity by setting the predetermined intensity using a setting means (70) to store a predetermined charge in a charge storage means (40) of the transmitter, the amount of charge stored in the charge storage means (40) determining the intensity of emission of the electromagnetic radiation, wherein the predetermined density is set in an interval in which the source (10) of electromagnetic radiation has not emitted electromagnetic radiation by said storing in the charge storage means (40) of the predetermined charge, **characterised in that** the method further comprises providing by the receiver, via a feedback path connecting the receiver to the transmitter, an indication whether electromagnetic radiation consistent with the electromagnetic radiation emitted by the transmitter is received at the receiver, the transmitter monitoring the feedback path and causing the setting means (70) of the transmitter to increase the predetermined intensity if, after a decrease in the predetermined intensity, the indication on the feedback path has changed to no longer indicate that electromagnetic radiation consistent with electromagnetic radiation emitted by the transmitter is received at the receiver.

5. A method according to Claim 4, further comprising applying a potential created by the charges stored in the charge storage means (10) to the gate of a drive transistor (20) arranged for driving the source (10) of electromagnetic radiation.

## Patentansprüche

1. Sicherheitsbarriere umfassend einen Transmitter und einen Empfänger, welcher mit dem Transmitter über einen Feedback-Pfad verbunden ist, wobei der Transmitter umfasst:
eine Quelle (10) von elektromagnetischer Strahlung;
ein Ladungsspeichermittel (40);
ein Betätigungsmittel (20), welches ausgebildet ist, um die Quelle (10) dazu zu veranlassen, intermittierend elektromagnetische Strahlung zu emittieren, wobei die Intensität der Emission der elektromagnetischen Strahlung durch die Menge an Ladung bestimmt wird, welche in dem Ladungsspeichermittel (40) gespeichert ist; und
ein Einstellmittel (70), welche ausgebildet sind, um die Intensität der elektromagnetischen Strahlung durch Speichern einer vorbestimmten Ladung in den Ladungsspeichermittel (40) in einer Zeitperiode einzustellen, wenn das Betätigungsmittel (20) die Quelle (10) nicht dazu veranlasst, elektromagnetische Strahlung zu emittieren;
**dadurch gekennzeichnet, dass**:
der Empfänger ausgebildet ist, um eine Anzeige über den Feedback-Pfad bereitzustellen, ob eine mit der vom Transmitter emittierten elektromagnetischen Strahlung übereinstimmenden elektromagnetischen Strahlung vom Empfänger empfangen wird, wobei der Transmitter ausgebildet ist, um den Feedback-Pfad zu überwachen und das Einstellmittel (70) dazu zu veranlassen, die vorbestimmte Intensität zu erhöhen, falls, nach einer vorgehenden Reduzierung der vorbestimmten Intensität, die Anzeige auf dem Feedback-Pfad sich verändert hat, indem sie nicht mehr anzeigt, dass eine mit der vom Transmitter emittierten elektromagnetischen Strahlung übereinstimmenden elektromagnetischen Strahlung vom Empfänger empfangen wird.

2. Sicherheitsbarriere nach Anspruch 1, wobei das Betätigungsmittel (20) ausgebildet ist, um die Quelle (10) dazu zu veranlassen, Bursts von Impulsen von elektromagnetischer Strahlung zu emittieren, und wobei das Einstellmittel (70) ausgebildet ist, um die vorbestimmte Intensität zwischen den Bursts einzustellen.

3. Sicherheitsbarriere nach einem der vorhergehenden Ansprüche, ferner umfassend einen schaltbaren Strombegrenzer (30, 90, 100), welcher in Reihe mit der Quelle (10) geschaltet ist.

4. Verfahren zum Betreiben einer Sicherheitsbarriere, umfassend einen Transmitter und einen Empfänger, das Verfahren umfassend das Veranlassen, dass eine Quelle (10) von elektromagnetischer Strahlung in dem Transmitter intermittierend elektromagnetische Strahlung mit einer vorbestimmten Intensität emittiert, indem die vorbestimmte Intensität durch Verwenden eines Einstellmittels (70) eingestellt wird, um eine vorbestimmte Ladung in einem Ladungsspeichermittel (40) des Transmitters zu speichern, wobei die Ladungsmenge, die im Ladungsspeichermittel (40) gespeichert ist, die Intensität der Emission der elektromagnetischen Strahlung bestimmt, wobei die vorbestimmte Dichte in einem Intervall eingestellt wird, in welchem die Quelle (10) der elektromagnetischen Strahlung keine elektromagnetische Strahlung emittiert hat, wegen des Speicherns der vorbestimmten Ladung im Ladungsspeichermittel (40), **dadurch gekennzeichnet, dass** das Verfahren ferner, durch den Empfänger, folgendes umfasst:
Bereitstellen, über einen Feedback-Pfad, der den Empfänger mit dem Transmitter verbindet, einer Anzeige, ob eine mit der vom Transmitter emittierten elektromagnetischen Strahlung übereinstimmenden elektromagnetischen Strahlung vom Empfänger empfangen wird, wobei der Transmitter den Feedback-Pfad überwacht und das Einstellmittel (70) des Transmitters dazu veranlasst, die vorbestimmte Intensität zu erhöhen, falls, nach einer Reduzierung der vorbestimmten Intensität, die Anzeige auf dem Feedback-Pfad sich verändert hat, indem sie nicht mehr anzeigt, dass eine mit der vom Transmitter emittierten elektromagnetischen Strahlung übereinstimmenden elektromagnetischen Strahlung vom Empfänger empfangen wird.

5. Verfahren nach Anspruch 4, ferner umfassend das Anwenden eines Potentials, welches durch die Ladungen erzeugt wird, welche in dem Ladungsspeichermittel (10) gespeichert sind, auf das Gate eines Treibertransistors (20), welcher ausgebildet ist, um die Quelle (10) der elektromagnetischen Strahlung anzutreiben.

## Revendications

1. Barrière de sécurité comprenant un émetteur et un récepteur qui est connecté à l'émetteur via une voie de rétroaction, l'émetteur comprenant :
une source (10) de rayonnement électromagnétique ;
un moyen de stockage de charges (40) ;
un moyen d'actionnement (20) qui est agencé de manière à ce qu'il force la source (10) à émettre par intermittence un rayonnement électromagnétique, dans laquelle l'intensité d'émission du rayonnement électromagnétique est déterminée par la quantité de charges qui sont stockées dans le moyen de stockage de charges (40) ; et
un moyen d'établissement (70) qui est agencé de manière à ce qu'il établisse l'intensité du rayonnement électromagnétique en stockant une charge prédéterminée dans le moyen de stockage de charges (40) dans une période temporelle pendant laquelle le moyen d'actionnement (20) ne force pas la source (10) à émettre un rayonnement électromagnétique ;
**caractérisée en ce que** :
le récepteur est agencé de manière à ce qu'il fournisse une indication, via la voie de rétroaction, de si oui ou non un rayonnement électromagnétique cohérent avec un rayonnement électromagnétique qui est émis par l'émetteur est reçu au niveau du récepteur, l'émetteur étant agencé de manière à ce qu'il surveille la voie de rétroaction et de manière à ce qu'il force le moyen d'établissement (70) à augmenter l'intensité prédéterminée si, après une diminution qui précède de l'intensité prédéterminée, l'indication sur la voie de rétroaction a changé de sorte qu'elle n'indique plus qu'un rayonnement électromagnétique cohérent avec un rayonnement électromagnétique qui est émis par l'émetteur est en train d'être reçu au niveau du récepteur.

2. Barrière de sécurité selon la revendication 1, dans laquelle ledit moyen d'actionnement (20) est agencé de manière à ce qu'il force la source (10) à émettre des salves d'impulsions de rayonnement électromagnétique et dans laquelle ledit moyen d'établissement (70) est agencé de manière à ce qu'il établisse l'intensité prédéterminée entre des salves.

3. Barrière de sécurité selon l'une quelconque des revendications qui précèdent, comprenant en outre un limiteur de courant pouvant être commuté (30, 90, 100) en série avec la source (10).

4. Procédé de fonctionnement d'une barrière de sécurité qui comprend un émetteur et un récepteur, le procédé comprenant le fait de forcer une source (10) de rayonnement électromagnétique dans l'émetteur à émettre par intermittence un rayonnement électromagnétique présentant une intensité prédéterminée en établissant l'intensité prédéterminée en utilisant un moyen d'établissement (70) pour stocker une charge prédéterminée dans un moyen de stockage de charges (40) de l'émetteur, la quantité de charges qui sont stockées dans le moyen de stockage de charges (40) déterminant l'intensité d'émission du rayonnement électromagnétique, dans lequel la densité prédéterminée est établie dans un intervalle dans lequel la source (10) de rayonnement électromagnétique n'a pas émis un rayonnement électromagnétique au moyen dudit stockage dans le moyen de stockage de charges (40) de la charge prédéterminée, **caractérisé en ce que** le procédé comprend en outre la fourniture par le récepteur, via une voie de rétroaction qui connecte le récepteur à l'émetteur, d'une indication de si oui ou non un rayonnement électromagnétique cohérent avec le rayonnement électromagnétique qui est émis par l'émetteur est reçu au niveau du récepteur, l'émetteur surveillant la voie de rétroaction et forçant le moyen d'établissement (70) de l'émetteur à augmenter l'intensité prédéterminée si, après une diminution de l'intensité prédéterminée, l'indication sur la voie de rétroaction a changé de sorte qu'elle n'indique plus qu'un rayonnement électromagnétique cohérent avec un rayonnement électromagnétique qui est émis par l'émetteur est en train d'être reçu au niveau du récepteur.

5. Procédé selon la revendication 4, comprenant en outre l'application d'un potentiel qui est créé par les charges qui sont stockées dans le moyen de stockage de charges (10) sur la grille d'un transistor de commande (20) qui est agencé pour commander la source (10) de rayonnement électromagnétique.
